# EUROPÄISCHE PATENTSCHRIFT

(11) **EP 2 585 980 B1**
(45) Veröffentlichungstag und Bekanntmachung des Hinweises auf die Patenterteilung: **29.08.2018**
(21) Anmeldenummer: 11727972.9
(22) Anmeldetag: 22.06.2011
(51) Int. Cl.: G06K 9/62, G08G 1/16, G06K 9/00

(54) **VERFAHREN UND SYSTEM ZUR BESCHLEUNIGTEN OBJEKTERKENNUNG UND/ODER BESCHLEUNIGTEN OBJEKTATTRIBUTERKENNUNG SOWIE VERWENDUNG DES VERFAHRENS**
METHOD AND SYSTEM FOR ACCELERATED OBJECT AND/OR OBJECT ATTRIBUTE RECOGNITION AND USE OF THE METHOD
PROCÉDÉ ET SYSTÈME POUR LA RECONNAISSANCE D'OBJETS ET/OU DES CARACTÉRISTIQUES D'OBJETS ET UTILISATION DU PROCÉDÉ

(30) Priorität: 23.06.2010 DE 102010030455
(43) Veröffentlichungstag der Anmeldung: 01.05.2013
(73) Patentinhaber: Continental Teves AG & Co. oHG, 60488 Frankfurt (DE)
(72) Erfinder: STÄHLIN, Ulrich, 65670 Eschborn (DE); KOMAR, Matthias, 60433 Frankfurt am Main (DE)
(74) Vertreter: Wagner, Philipp
(86) Internationale Anmeldenummer: PCT/EP2011/060470
(87) Internationale Veröffentlichungsnummer: WO 2011/161176

(56) Entgegenhaltungen:
- WO-A2-03/001474
- DE-A1-102007 048 809
- FR-A1- 2 896 594
- WENDER S ET AL: "3D vehicle detection using a laser scanner and a video camera", IET INTELLIGENT TRANSPORT SYSTEMS,, Bd. 2, Nr. 2, 9. Juni 2008 (2008-06-09), Seiten 105-112, XP006030986, ISSN: 1751-9578, DOI: 10.1049/IET-ITS:20070031
- VARSHNEY P K: "Multisensor data fusion", ELECTRONICS AND COMMUNICATION ENGINEERING JOURNAL, INSTITUTION OF ELECTRICAL ENGINEERS, LONDON, GB, Bd. 9, Nr. 6, 1. Dezember 1997 (1997-12-01), Seiten 245-253, XP002347145, ISSN: 0954-0695, DOI: 10.1049/ECEJ:19970602
- GIORGIO RUSCONI ET AL: "I-WAY, intelligent co-operative system for road safety", INTELLIGENT VEHICLES SYMPOSIUM, 2007 IEEE, IEEE, PI, 1. Juni 2007 (2007-06-01), Seiten 1056-1061, XP031127086, ISBN: 978-1-4244-1067-5

## Beschreibung

Die Erfindung betrifft ein Verfahren zur beschleunigten Objekterkennung und/oder zur beschleunigten Objektattributerkennung gemäß Oberbegriff von Anspruch 1, dessen Verwendung sowie ein System zur beschleunigten Objekterkennung und/oder zur beschleunigten Objektattributerkennung gemäß Oberbegriff von Anspruch 10.

Im Stand der Technik ist bereits eine Vielzahl unterschiedlicher Sensorsysteme zur Umfelderfassung bekannt. Ebenso ist es bereits bekannt, über drahtlos kommunizierende Telematiksysteme Informationen über die Fahrzeugumgebung zu erhalten und zu versenden. Unter bestimmten Voraussetzungen und bei ausreichender Zuverlässigkeit dieser Systeme können die erfassten Informationen zu Eingriffen in die Fahrzeugsteuerung, beispielsweise in Form einer autonomen Notbremsung, genutzt werden.

In diesem Zusammenhang offenbart die WO 2004/085220 z.B. ein elektronisches Steuersystem für ein Fahrzeug und ein Verfahren zum Ermitteln eines vom Fahrer unabhängigen Eingriffs in ein Fahrzeugsystem. Dabei ermittelt zunächst ein Fahrerwunschmodul einen Fahrerwunsch aus dem Pedalweg, aus Umsetzbewegungen zwischen den Pedalen und aus dem Bremsdruck in der Bremsanlage. Ein Gefahrenrechner ermittelt anschließend das vorliegende Gefahrenpotential mittels einer Bewertung des Fahrerwunschs und einer Bewertung von weiteren Daten wie etwa Umfeldsensordaten. Außerdem ist das elektronische Steuersystem weiterhin mit verschiedenen, autonom arbeitenden Assistenzsystemen verbunden. Die Fahrerwunschdaten und die Umfelddaten werden vom Gefahrenrechner ausgewertet und entsprechende Anforderungsbefehle werden an die einzelnen Assistenzsysteme ausgegeben. Die Anforderungsbefehle betreffen dabei sowohl die passive als auch die aktive Sicherheit. In Abhängigkeit des erkannten Gefahrenpotentials kann somit ein Fahrzeugsteuereingriff durchgeführt werden.

Die WO 2009/071345 A1 beschreibt ein zentrales Steuergerät für mehrere in einem Kraftfahrzeug vorgesehene Assistenzsysteme, von denen mindestens ein Assistenzsystem mit Umfeldsensoren ausgestattet ist. Das zentrale Steuergerät verbindet die einzelnen Assistenzsysteme und verknüpft die von den Assistenzsystemen erhaltenen Sensorinformationen miteinander, um nicht-redundante Sensorinformationen analytisch zu überprüfen und zu plausibilisieren. Zusätzlich kann, z.B. bei einer Kamera, die Sensorinformation durch Abgleich mit einer zeitlich später erfassten Sensorinformation desselben Sensors überprüft werden. Wenn die Kamera über einen bestimmten Zeitrahmen bzw. über mehrere Messzyklen hinweg dasselbe Objekt erfasst, so kann dessen Existenz als validiert gelten. Des Weiteren werden die Möglichkeiten beschrieben, eine über Fahrzeug-zu-X-Kommunikation empfangene Information mittels eines Umfeldsensors zu validieren oder eine bereits von einem fremden Sender plausibilisierte Information zu empfangen.

Die unveröffentlichte DE 10 2010 031 466 A1 beschreibt ein Verfahren zur Validierung von mittels Fahrzeug-zu-X-Kommunikation erfassten Informationen ohne das Miteinbeziehen eines Umfeldsensors zur Validierung der empfangenen Informationen. Dazu werden die in der Fahrzeug-zu-X-Information enthaltenen Positionsangaben des Senders mit beim Empfang der Botschaft vom Empfänger selbst errechneten Positionsangaben des Senders verglichen. Um die Position des Senders errechnen zu können, wird weiterhin eine Sendervalidierungseinrichtung mit mindestens zwei Antennen beschrieben, welche eine unterschiedliche Geometrie oder eine unterschiedliche Materialzusammensetzung aufweisen oder zumindest an unterschiedlichen Anbringungsorten am Fahrzeug angeordnet sind. Durch Abgleich der in den einzelnen Antennen empfangenen Feldstärken kann ein Rückschluss auf die tatsächliche Position des Senders gezogen und diese damit ggf. validiert werden. Wenn die errechnete Position jedoch von der mittels Fahrzeug-zu-X-Kommunikation gesendeten Position abweicht, wird der gesamte Inhalt der empfangenen Fahrzeug-zu-X-Information als unzuverlässig verworfen.

Aus der Publikation "3D vehicle detection using a laser scanner and video camera" von S. Wender und K. Dietmayer (IET Intelligent Transport Systems, Bd. 2, Nr. 2, 9. Juni 2008 (2008-06-09), Seiten 105-112, XP006030986, ISSN: 1751-9578, DOI: 10.1049/IET-IST:20070031) ist ein Verfahren zur dreidimensionalen Fahrzeugerkennung mittels eines Laserscanners und eines Videosensors bekannt. Zunächst werden dabei mittels des Laserscanners eine räumliche Orientierung und eine Entfernung eines im Erfassungsbereich des Laserscanners befindlichen Objekts bestimmt. Die dreidimensionale Fahrzeugform wird durch einen Quader angenähert. Anschließend wird bestimmt, welche Seite des Objekts vom Videosensor am besten erfasst werden kann. Diese Seite wird nun rekonstruiert, indem ein der Position des Quaders entsprechender Bildausschnitt des videosensors derart digital bearbeitet wird, dass diese Seite scheinbar senkrecht zum Videosensor steht. Dieser Schritt ermöglicht eine Fahrzeugerkennung mittels zweier unabhängiger Klassifizierungskaskaden bzw. mittels zweier unabhängiger Detektoren zur Fahrzeugerkennung, wobei mittels der ersten Klassifizierungskaskade bzw. mittels des ersten Detektors ausschließlich Front- und Rückansichten und mittels der zweiten Klassifizierungskaskade bzw. mittels deszweiten Detektors ausschließlich Links- und Rechtsansichten von Fahrzeugen erkennt werden. Durch das scheinbare Drehen des Quaders senkrecht zum Videosensor kann die Anzahl der zu durchlaufenden Klassifizierungskaskaden bzw. Detektoren auf zwei reduziert werden.

Nachteilig bei den Verfahren gemäß dem Stand der Technik ist es, dass eine sicherheitsrelevante Fahrzeug-zu-X-Information erst dann für einen unfallvermeidenden Eingriff in die Fahrzeugsteuerung genutzt werden kann, wenn sie zuvor einem vergleichsweise langwierigen Validierungsprozess unterworfen wurde. Die Validierung kann gemäß dem Stand der Technik mittels Umfeldsensoren oder mittels eines Abgleichs der empfangenen Feldstärken vorgenommen werden. Sofern die empfangene Fahrzeug-zu-X-Information mittels einer Positionsbestimmung des Senders aus den empfangenen Feldstärken validiert wird, ist es notwendig, zunächst eine Reihe von Fahrzeug-zu-X-Informationen des selben Senders zu empfangen, bevor dessen Position hinreichend genau bestimmt werden kann. Hierdurch verstreicht eine unter Umständen kritische Zeitspanne ungenutzt, bevor ein autonomer, unfallvermeidender Eingriff in die Fahrzeugsteuerung ausgeführt werden kann. Ebenso benötigt eine sichere Erkennung einer Situation mittels eines Umfeldsensors in der Regel mehrere Mess- und Verarbeitungszyklen, bevor die Umfeldsensordaten für die Validierung der Fahrzeug-zu-X-Information bereit stehen. Daher verstreicht auch hier eine zur Unfallvermeidung ggf. kritische Zeitspanne ungenutzt. Da eine Fahrzeug-zu-X-Information in den meisten Anwendungsfällen mittels Umfeldsensoren validiert wird, besteht somit besonderer Bedarf an einem Verfahren zur schnellen Objekterkennung mittels Umfeldsensoren.

Der Erfindung liegt daher die Aufgabe zugrunde, ein Verfahren und ein System vorzuschlagen, welche eine beschleunigte Objekterkennung und/oder eine beschleunigte Objektattributerkennung mittels eines Umfeldsensors ermöglichen.

Diese Aufgabe wird erfindungsgemäß durch das Verfahren zur beschleunigten Objekterkennung und/oder zur beschleunigten Objektattributerkennung gemäß Anspruch 1 und das System zur beschleunigten Objekterkennung und/oder zur beschleunigten Objektattributerkennung gemäß Anspruch 9 gelöst. Gemäß dem erfindungsgemäßen Verfahren zur beschleunigten Objekterkennung und/oder zur beschleunigten Objektattributerkennung wird eine erste Information von einer Fahrzeug-zu-X-Kommunikationseinrichtung erfasst, wobei die erste Information mindestens ein Objekt und/oder mindestens ein Objektattribut in ausgewerteter Datenform beschreibt, und eine zweite Information von mindestens einem Einzelsensor oder von einem Sensorverbund erfasst wird, wobei die zweite Information das mindestens eine Objekt und/oder das mindestens eine Objektattribut in Sensorrohdatenform beschreibt. Auf Sensorrohdaten der zweiten Information wird ein Objekterkennungsalgorithmus und/oder ein Objektattributerkennungsalgorithmus angewandt, wobei das mindestens eine Objekt und/oder das mindestens eine Objektattribut in den Sensorrohdaten der zweiten Information erkannt wird, sobald der Schwellenwert des Objekterkennungsalgorithmus und/oder des Objektattributerkennungsalgorithmus erreicht wird. Das erfindungsgemäße Verfahren zeichnet sich dadurch aus, dass ein Schwellenwert des Objekterkennungsalgorithmus und/oder des Objektattributerkennungsalgorithmus zur Erkennung des von der ersten Information beschriebenen mindestens einen Objekts und/oder mindestens einen Objektattributs in den Sensorrohdaten der zweiten Information reduziert wird.

Unter dem Begriff Sensorrohdaten werden im Rahmen der Erfindung alle unausgewerteten Signale verstanden, welche von unterschiedlichen Umfeldsensoren zur Auswertung ausgegeben werden. Der Begriff ausgewertete Datenform bezeichnet im Rahmen der Erfindung hingegen die bereits ausgewerteten Sensorrohdaten der unterschiedlichen Umfeldsensoren sowie die Datenform aller mittels Fahrzeug-zu-X-Kommunikation übermittelten Informationen. In ausgewerteter Datenform werden Objekte und Objektattribute derart beschrieben, dass sie von Fahrerassistenzsystemen und anderweitigen Fahrzeugeinrichtungen ohne weitere Datenformatskonvertierung oder Auswerteprozesse sofort verarbeitet werden können.

Das Verfahren bietet somit den Vorteil, dass eine mittels einer Fahrzeug-zu-X-Kommunikationseinrichtung erfasste erste Information mittels eines Einzelsensors oder eines Sensorverbunds vergleichsweise schnell validiert werden kann, da die Objekterkennung bzw. Objektattributerkennung durch den Einzelsensor oder den Sensorverbund aufgrund der reduzierten Schwellenwerte vergleichsweise schnell durchgeführt wird. Daraus, dass das mindestens eine Objekt und/oder das mindestens eine Objektattribut in den Sensorrohdaten der zweiten Information erkannt wird, sobald der Schwellenwert des Objekterkennungsalgorithmus und/oder des Objektattributerkennungsalgorithmus erreicht wird, ergibt sich zunächst der Vorteil, dass nach wie vor eine Schwelle erreicht werden muss, bei deren Erreichen erst die Sicherheit groß genug ist, um ein Objekt bzw. ein Objektattribut in den Sensorrohdaten zuverlässig zu erkennen. Indem das Objekt bzw. das Objektattribut bei Erreichen des Schwellenwerts erkannt wird, ergibt sich weiterhin der Vorteil, dass nun eine zuverlässige Information zur Verfügung steht, welche beispielsweise zur Validierung weiterer Informationen genutzt werden kann. Die validierte Information kann aufgrund ihrer hohen Zuverlässigkeit verschiedenen, auch autonom arbeitenden Fahrerassistenzsystemen zur Verfügung gestellt werden. Die Fahrerassistenzsysteme wiederum können die validierte Information beispielsweise für einen Eingriff in die Fahrzeugsteuerung nutzen, um einen Unfall zu vermeiden. Ebenso kann die Information aber auch als zuverlässige Grundlage für das Ausgeben einer Warnung an den Fahrer genutzt werden.

Bevorzugt ist es vorgesehen, dass der Objekterkennungsalgorithmus eine Existenz eines Objekts erkennt und/oder der Objektattributerkennungsalgorithmus eine Bewegungsrichtung und/oder eine relative und/oder absolute Position und/oder eine Geschwindigkeit und/oder eine Gattung des Objekts erkennt. Daraus ergibt sich der Vorteil, dass mittels des Objekterkennungsalgorithmus zunächst ein Objekt als existent erkannt wird. Dies ist eine grundlegende Information für die Beurteilung einer vorliegenden Situation und für evtl. Reaktionen unterschiedlicher Fahrerassistenzsysteme. Von gleichrangiger Bedeutung für die Beurteilung einer vorliegenden Situation ist auch die Position eines erkannten Objekts. Nur so kann beurteilt werden, ob ein erkanntes Objekt eine potentielle Gefahr darstellt oder nicht. Sofern durch den Objektattributerkennungsalgorithmus zusätzlich die Bewegungsrichtung und die Geschwindigkeit des Objekts bekannt sind, kann die Beurteilung der Situation dahingehend verbessert werden, dass mittels eines Abgleichs mit der eigenen Bewegungsrichtung und Geschwindigkeit eine evtl. Gefahr noch präziser beurteilt werden kann. Schließlich ist auch die Gattung des Objekts von Bedeutung, da beispielweise die Kollision mit einem am Straßenrand geparkten Fahrzeug der mit einem Fußgänger vorzuziehen ist.

In einer weiteren bevorzugten Ausführungsform ist es vorgesehen, dass der Schwellenwert hinsichtlich der zu seinem Erreichen notwendigen Anzahl an Messzyklen, während der die zweite Information erfasst wird, reduziert wird. Dies beschleunigt die Objekterkennung bzw. die Objektattributerkennung, da jedem Messzyklus eine feste Rechenzeit zugeordnet ist. Durch die Reduzierung der Messzyklen reduziert sich somit die notwendige Rechenzeit bis zur abgeschlossenen Objekterkennung bzw. bis zur abgeschlossenen Objektattributerkennung.

Zweckmäßigerweise ist es vorgesehen, dass der Schwellenwert hinsichtlich der zu seinem Erreichen notwendigen statistischen Wahrscheinlichkeit, mit der das mindestens eine Objekt und/oder das mindestens eine Objektattribut in den Sensorrohdaten erkannt wird, reduziert wird. Dies ermöglicht ebenfalls eine beschleunigte Objekterkennung bzw. Objektattributerkennung, welche in Kombination mit der Reduzierung der zum Erreichen des Schwellenwerts notwendigen Anzahl an Messzyklen zu einer zusätzlichen Beschleunigung führt. Indem der Schwellenwert hinsichtlich der zu seinem Erreichen notwendigen statistischen Wahrscheinlichkeit reduziert wird, ergibt sich der Vorteil, dass ein Objekt schneller in den Sensorrohdaten erkannt werden kann. So kann beispielsweise ein von der ersten Information beschriebenes Objekt bzw. Objektattribut als Zielvorgabe für die Objekterkennung bzw. Objektattributerkennung in den Sensorrohdaten der zweiten Information dienen. Wenn das von der ersten Information beschriebene Objekt bzw. Objektattribut hinsichtlich seiner Erkennungswahrscheinlichkeit nur als eines von mehreren möglichen Objekten bzw. Objektattributen in den Sensorrohdaten erkennbar ist, kann aufgrund der entsprechend reduzierten Schwellenwerte für die Erkennung des von der ersten Information beschriebenen Objekts bzw. Objektattributs auch bei vergleichsweise geringer Erkennungswahrscheinlichkeit eine im Wesentlichen zuverlässige Erkennung vorgenommen werden.

Außerdem ist es vorteilhaft, dass das mindestens eine Objekt und/ oder das mindestens eine Objektattribut in den Sensorrohdaten der zweiten Information erkannt wird, sobald der Schwellenwert des Objekterkennungsalgorithmus und/oder des Objektattributerkennungsalgorithmus erreicht wird. Daraus ergibt sich zunächst der Vorteil, dass nach wie vor eine Schwelle erreicht werden muss, bei deren Erreichen erst die Sicherheit groß genug ist, um ein Objekt bzw. ein Objektattribut in den Sensorrohdaten zuverlässig zu erkennen. Indem das Objekt bzw. das Objektattribut bei Erreichen des Schwellenwerts erkannt wird, ergibt sich weiterhin der Vorteil, dass nun eine zuverlässige Information zur Verfügung steht, welche beispielsweise zur Validierung weiterer Informationen genutzt werden kann.

Gemäß einer weiteren bevorzugten Ausführungsform der Erfindung ist es vorgesehen, dass bei Erreichen des Schwellenwerts eine Beschreibung des mindestens einen erkannten Objekts und/oder des mindestens einen erkannten Objektattributs von Sensorrohdatenform in ausgewertete Datenform umgewandelt wird. Somit stehen die sicher erkannten Informationen in einer Datenform zur Verfügung, die die weitere Verarbeitung durch unterschiedliche Fahrzeugsysteme vereinfacht. Beispielsweise können die erkannten Informationen einem Fahrerassistenzsystem zur Verfügung gestellt werden.

Bevorzugt ist es vorgesehen, dass das mindestens eine Objekt und/oder das mindestens eine Objektattribut als validiert gekennzeichnet wird, sobald der Schwellenwert des Objekterkennungsalgorithmus und/oder des Objektattributerkennungsalgorithmus erreicht wird. Da in den Sensorrohdaten der Einzelsensoren oder des Sensorverbunds ohnehin nach den von der ersten Information beschriebenen Objekten oder Objektattributen gesucht wird und diese bei Erreichen des Schwellenwerts auch erkannt werden, liegt somit bei Erreichen des Schwellenwerts eine Informationsredundanz vor. Ein gesonderter Validierungsprozess kann daher entfallen.

In einer weiteren bevorzugten Ausführungsform ist es vorgesehen, dass das Verfahren einem kontinuierlichen Sensordatenfusionsprozess eingegliedert ist, wobei jeder Einzelsensor pro Messzyklus eine eigene zweite Information bereitstellt oder der Sensorverbund pro Messzyklus eine Vielzahl von zweiten Informationen bereitstellt, wobei der Sensordatenfusionsprozess in den Sensorrohdaten der zweiten Informationen erkannte Objekte und/oder Objektattribute untereinander abgleicht und/oder ergänzt und eine gemeinsame Fusionsinformation in ausgewerteter Datenform erzeugt, wobei die Eingliederung in den Sensordatenfusionsprozess derart ausgeführt ist, dass in der ersten Information beschriebene Objekte und/oder Objektattribute mit den in den Sensorrohdaten der zweiten Informationen erkannten Objekten und Objektattributen abgeglichen und/oder ergänzt werden. Dadurch ergibt sich der Vorteil, dass ein möglichst vollständiges Informationsprofil über die Fahrzeugumgebung in einer einzelnen Fusionsinformation erzeugt werden kann. Ein weiterer Vorteil liegt darin, dass die Fusionsinformation in ausgewerteter Datenform vorliegt. Dadurch vereinfacht sich die weitere Verarbeitung der erkannten Objekte bzw. Objektattribute durch die unterschiedlichen Fahrzeugeinrichtungen und Fahrerassistenzsysteme.

Zweckmäßigerweise ist es vorgesehen, dass das mindestens eine als validiert gekennzeichnete Objekt und/oder das mindestens eine als validiert gekennzeichnete Objektattribut in ausgewerteter Datenform mindestens einem Fahrerassistenzsystem zur Verfügung gestellt wird, wobei das mindestens eine Fahrerassistenzsystem zur Bewarnung eines Fahrers und/oder zum Eingreifen in die Fahrzeugsteuerung und/oder zum Übersteuern einer Fahrervorgabe ausgebildet ist. Die als validiert gekennzeichneten Objekte bzw. Objektattribute stellen verlässliche Grundlagen für die Ausgabe einer Warnung an den Fahrer oder sogar für autonome Eingriffe in die Fahrzeugsteuerung dar. Somit werden Fehlwarnungen vermieden und es kann ggf. sogar ohne Mitwirken des Fahrers eine Gefahrensituation bzw. ein Verkehrsunfall abgewendet werden.

Die Erfindung betrifft weiterhin ein System zur beschleunigten Objekterkennung und zur beschleunigten Objektattributerkennung. Das System umfasst eine Fahrzeug-zu-X-Kommunikationseinrichtung zum Erfassen einer ersten Information, wobei die erste Information mindestens ein Objekt und/oder mindestens ein Objektattribut in ausgewerteter Datenform beschreibt und mindestens einen Einzelsensor oder einen Sensorverbund zum Erfassen einer zweiten Information, wobei die zweite Information mindestens ein Objekt und/oder mindestens ein Objektattribut in Sensorrohdatenform beschreibt. Weiterhin umfasst das System eine Analysevorrichtung, welche auf Datenebene mit der Fahrzeug-zu-X-Kommunikationseinrichtung und dem mindestens einen Einzelsensor oder dem Sensorverbund gekoppelt ist und einen Objekterkennungsalgorithmus und/oder einen Objektattributerkennungsalgorithmus ausführt und auf Sensorrohdaten der zweiten Information anwendet. Das erfindungsgemäße System zeichnet sich dadurch aus, dass die Analysevorrichtung einen Schwellenwert des Objekterkennungsalgorithmus und/oder des Objektattributerkennungsalgorithmus zur Erkennung des von der ersten Information beschriebenen mindestens einen Objekts und/oder mindestens einen Objektattributs in den Sensorrohdaten der zweiten Information reduziert. Das erfindungsgemäße System umfasst somit alle notwendigen Mittel zur Ausführung des erfindungsgemäßen Verfahrens und ermöglicht auf einfache Weise eine beschleunigte Objekterkennung bzw. Objektattributerkennung in den Sensorrohdaten des Einzelsensors oder des Sensorverbunds. Daraus ergeben sich die bereits beschriebenen Vorteile.

Vorzugsweise zeichnet sich das System dadurch aus, dass die Analysevorrichtung ein elektronisches Rechenwerk umfasst, welches zumindest anteilig Rechenoperationen für von der Analysevorrichtung verschiedene Fahrzeugeinrichtungen ausführt. Somit ergibt sich der Vorteil, dass nicht jede Fahrzeugvorrichtung mit einem eigenen Rechenwerk versehen werden muss, was sowohl den Herstellungsprozess vereinfacht als auch die Produktionskosten reduziert. Das von der Analysevorrichtung umfasste Rechenwerk kann baulich entweder der Analysevorrichtung selbst zugeordnet sein oder aber einer von der Analysevorrichtung verschiedenen Fahrzeugeinrichtung. Durch den gemeinsamen Zugriff unterschiedlicher Fahrzeugeinrichtungen auf dasselbe Rechenwerk ergibt sich zudem eine effektive und schnelle Datenverknüpfung der entsprechenden Fahrzeugeinrichtungen.

Weiterhin ist es vorteilhaft, dass die Analysevorrichtung bei Erreichen des Schwellenwerts eine Beschreibung des mindestens einen erkannten Objekts und/oder des mindestens einen erkannten Objektattributs von Sensorrohdatenform in ausgewertete Datenform umwandelt. Dies vereinfacht die weitere Verarbeitung der sicher erkannten Informationen.

Bevorzugt ist es vorgesehen, dass die Analysevorrichtung zusätzlich einen kontinuierlichen Sensordatenfusionsprozess ausführt, wobei jeder Einzelsensor pro Messzyklus eine eigene zweite Information bereitstellt oder der Sensorverbund pro Messzyklus eine Vielzahl von zweiten Informationen bereitstellt, wobei der Sensordatenfusionsprozess in den Sensorrohdaten der zweiten Informationen erkannte Objekte und/oder Objektattribute untereinander abgleicht und/oder ergänzt und eine gemeinsame Fusionsinformation in ausgewerteter Datenform erzeugt, wobei die Analysevorrichtung in der ersten Information beschriebene Objekte und/oder Objektattribute mit den in den Sensorrohdaten der zweiten Informationen erkannten Objekten und/oder Objektattributen abgleicht und/oder ergänzt. Somit wird ein möglichst vollständiges Informationsprofil über die Fahrzeugumgebung in nur einer einzigen Fusionsinformation erzeugt. Da die Fusionsinformation zudem in ausgewerteter Datenform vorliegt, vereinfacht sich die weitere Verarbeitung durch entsprechende Fahrerassistenzsysteme und Fahrzeugeinrichtungen.

Bevorzugt ist es vorgesehen, dass der mindestens eine Einzelsensor oder der Sensorverbund die zweite Information auf Basis mindestens eines der folgenden Wirkprinzipien erfasst:
- Lidar,
- Radar,
- Kamera und
- Ultraschall.
Hierbei handelt es sich um im Kraftfahrzeugbereich typischerweise verwendete Sensorgattungen, die im Wesentlichen eine umfassende Erfassung und Erkennung des Fahrzeugumfelds ermöglichen. Zum gegenwärtigen Zeitpunkt ist bereits eine Vielzahl von Fahrzeugen standardmäßig mit mehreren Sensoren der genannten Gattungen ausgestattet und diese Zahl wird in Zukunft weiter zunehmen. Der zusätzliche Ausrüstungsaufwand zur Implementierung des erfindungsgemäßen Verfahrens in ein Kraftfahrzeug ist daher gering.

Es ist vorteilhaft, dass die Fahrzeug-zu-X-Kommunikationseinrichtung die erste Information auf Basis mindestens einer der folgenden Verbindungsarten erfasst:
- WLAN-Verbindung, insbesondere nach IEEE 802.11,
- ISM-Verbindung (Industrial, Scientific, Medical Band),
- Bluetooth,
- ZigBee,
- UWB,
- WiMax,
- Infrarotverbindung und
- Mobilfunkverbindung.
Diese Verbindungsarten bieten dabei unterschiedliche Vor- und Nachteile, je nach Art und Wellenlänge. WLAN-Verbindungen ermöglichen z.B. eine hohe Datenübertragungsrate und einen schnellen Verbindungsaufbau. ISM-Verbindungen bieten hingegen nur eine geringere Datenübertragungsrate, sind aber hervorragend zur Datenübertragung um Sichthindernisse herum geeignet. Infrarotverbindungen wiederum bieten ebenfalls eine geringe Datenübertragungsrate. Mobilfunkverbindungen schließlich werden durch Sichthindernisse nicht beeinträchtigt und bieten eine gute Datenübertragungsrate. Dafür ist der Verbindungsaufbau jedoch vergleichsweise langsam. Durch die Kombination und gleichzeitige bzw. parallele Nutzung mehrerer dieser Verbindungsarten ergeben sich weitere Vorteile, da so die Nachteile einzelner Verbindungsarten ausgeglichen werden können.

Des Weiteren betrifft die vorliegende Erfindung eine Verwendung des Verfahrens zur beschleunigten Objekterkennung und/oder zur beschleunigten Objektattributerkennung in einem Kraftfahrzeug.

Weitere bevorzugte Ausführungsformen ergeben sich aus den Unteransprüchen und der nachfolgenden Beschreibung eines Ausführungsbeispiels an Hand von Figuren.

Es zeigt
- Fig. 1: ein Flussdiagramm, welches die einzelnen Ablaufschritte einer möglichen Ausführungsform des erfindungsgemäßen Verfahrens darstellt,
- Fig. 2: eine Verkehrssituation, in der das erfindungsgemäße Verfahren zum Einsatz kommt,
- Fig. 3: eine weitere Verkehrssituation, in der das erfindungsgemäße Verfahren zum Einsatz kommt und
- Fig. 4: schematisch einen möglichen Aufbau des erfindungsgemäßen Systems.

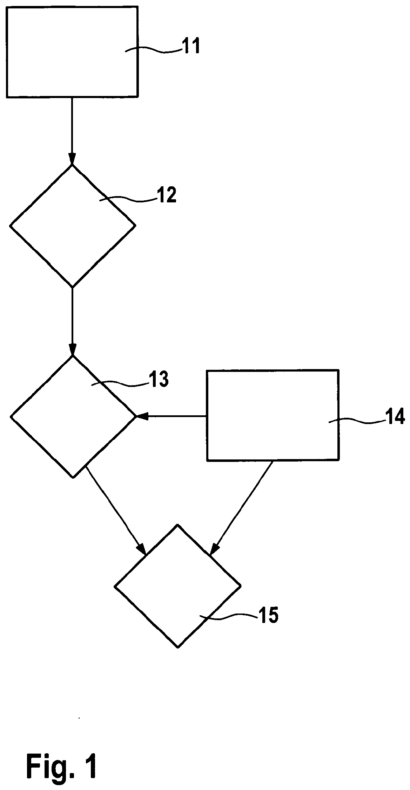

Fig. 1 zeigt einen beispielhaften und schematischen Ablauf des erfindungsgemäßen Verfahrens in Form eines Flussdiagramms. In Schritt 11 wird eine zweite Information mittels Umfeldsensorik in Sensorrohdatenform erfasst. Beispielsgemäß handelt es sich um die Existenz und die Position eines Objekts. Im folgenden Schritt 12 werden nun ein Objekterkennungsalgorithmus und ein Objektattributerkennungsalgorithmus auf die Sensorrohdaten der zweiten Information angewandt. Da in Schritt 14 eine erste Information mittels Fahrzeug-zu-X-Kommunikation empfangen wird, wird in Schritt 13 ein entsprechender Schwellenwert des Objekterkennungsalgorithmus zur Erkennung des von der ersten Information beschriebenen Objekts und ein Objektattributerkennungsalgorithmus zu Erkennung seiner Position reduziert. Da die erste Information und die zweite Information beispielsgemäß dasselbe Objekt an derselben Position beschreiben, wird der reduzierte Schwellenwert zur Objekterkennung bereits nach nur einem Messzyklus durch die Umfeldsensorik erreicht. Sobald der reduzierte Schwellenwert des Objekterkennungsalgorithmus und der reduzierte Schwellenwert des Objektattributerkennungsalgorithmus erreicht wurden, gelten das beschriebene Objekt und seine Position als erkannt. In Schritt 15 werden sowohl die mittels Fahrzeug-zu-X-Kommunikation empfangene erste Information als auch die mittels Umfeldsensorik erfasste zweite Information einem Sensordatenfusionsprozess zugeführt.

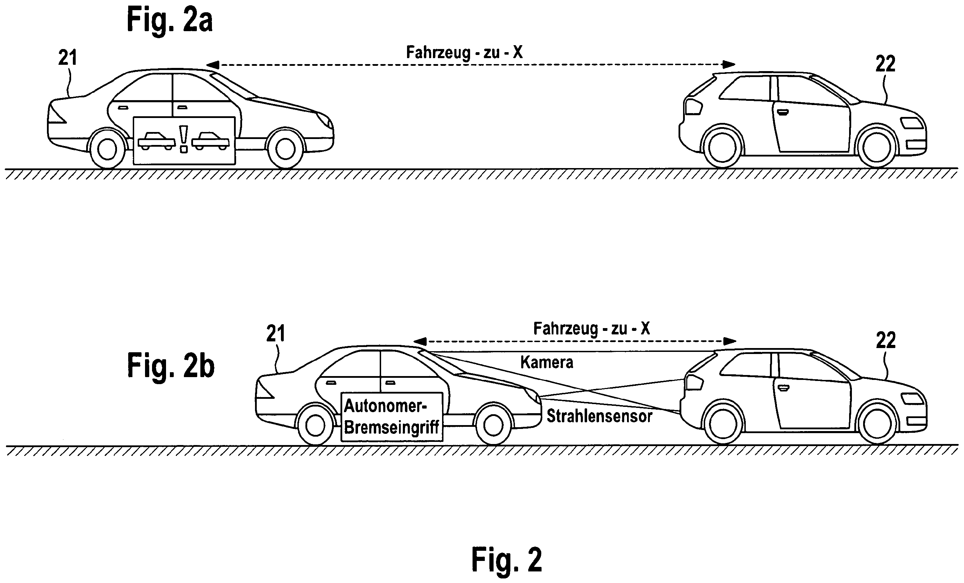

In Fig. 2a ist eine beispielhafte Verkehrssituation dargestellt, in der das erfindungsgemäße Verfahren zum Einsatz kommt. Fahrzeug 22 beginnt einen Bremsvorgang und übermittelt den von einem Beschleunigungssensor gemessenen Verzögerungswert mittels Fahrzeug-zu-X-Kommunikation an nachfolgendes Fahrzeug 21. Fahrzeug 21 ist mit dem erfindungsgemäßen System zur beschleunigten Objekterkennung und/oder zur beschleunigten Objektattributerkennung ausgestattet und nutzt den mittels Fahrzeug-zu-X-Kommunikation empfangenen Verzögerungswert für die Reduzierung entsprechender Schwellenwerte eines Objektattributerkennungsalgorithmus in den Sensorrohdaten eines Kamerasensors und eines Radarsensors. Sowohl der Kamerasensor als auch der Radarsensor erfassen eine Verzögerung von Fahrzeug 22, deren Wert aber zunächst nicht genau bestimmt werden kann. Mit der Beschreibung des über Fahrzeug-zu-X-Kommunikation empfangenen Werts wird in den Sensorrohdaten bereits nach wenigen Messzyklen die übermittelte Verzögerung erkannt und die Fahrzeug-zu-X-Information kann bestätigt werden.

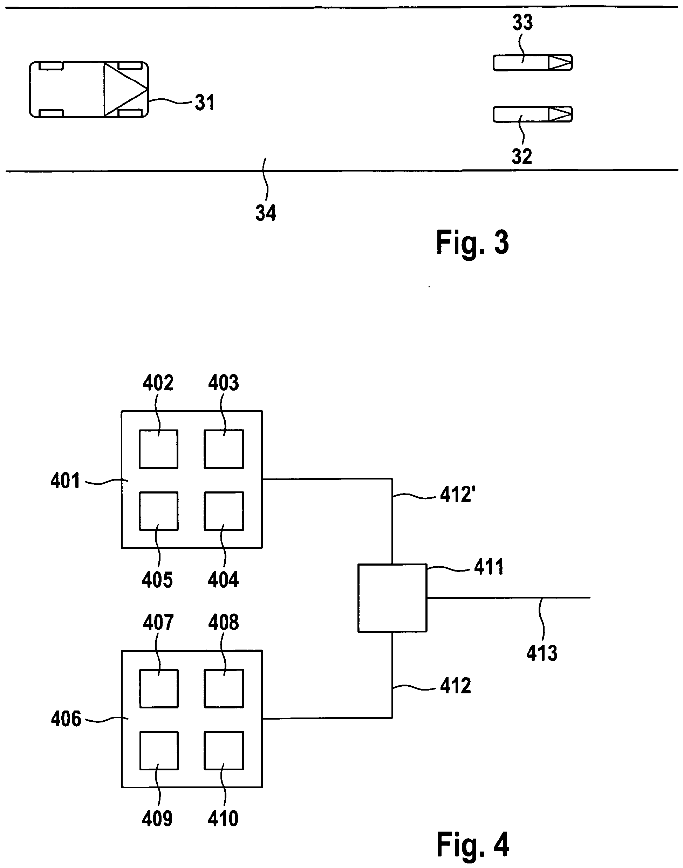

Das Ausführungsbeispiel in Fig. 3 stellt schematisch Straße 34 mit Fahrzeug 31 und Motorrädern 32 und 33 dar. Fahrzeug 31 folgt Motorrädern 32 und 33 in Fahrtrichtung. Fahrzeug 31 verfügt über das erfindungsgemäße System zur beschleunigten Objekterkennung und/oder zur beschleunigten Objektattributerkennung. Mittels der zugehörigen Fahrzeug-zu-X-Kommunikationseinrichtung empfängt Fahrzeug 31 regelmäßige Identifikations- und Positionsnachrichten von Motorrädern 32 und 33. Die erfassten ersten Informationen beschreiben daher zwei Motorräder 32 und 33, welche beispielsgemäß dicht nebeneinander fahren. Mittels eines ebenfalls in Fahrzeug 31 vorhandenen Radarsensors werden zweite Informationen in Sensorrohdatenform erzeugt. Da Motorräder 32 und 33 jedoch dicht nebeneinander fahren, ist in den Sensorrohdaten jedoch die statistische Wahrscheinlichkeit für die Erkennung eines größeren Einzelobjekts höher als die statistische Wahrscheinlichkeit für die Erkennung zweier kleinerer Einzelobjekte, welche dicht nebeneinander positioniert sind. Im Rahmen des erfindungsgemäßen Verfahrens wird nun jedoch der Schwellenwert des Objekterkennungsalgorithmus hinsichtlich der zu seinem Erreichen notwendigen statistischen Wahrscheinlichkeit, mit der Motorräder 32 und 33 erkannt werden, reduziert. Somit wird der Schwellenwert zur Erkennung zweier Einzelobjekte, nämlich Motorräder 32 und 33, bereits vor dem Schwellenwert zur Erkennung nur eines Einzelobjekts erreicht. Anschließend wird die Information in ausgewertete Datenform umgewandelt und verschiedenen Fahrerassistenzsystemen zur Verfügung gestellt.

Ein weiteres Ausführungsbeispiel der Erfindung ist wieder in Fig. 2 dargestellt. In Fig. 2a betätigt der Fahrer von Fahrzeug 22 das Bremspedal. Die Bremspedalbetätigung wird zeitgleich zum Druckaufbau im Bremssystem von Fahrzeug 22 mittels einer Fahrzeug-zu-X-Kommunikationseinrichtung an Fahrzeug 21 übermittelt. Fahrzeug 21 ist mit dem erfindungsgemäßen System ausgerüstet und empfängt die Information über den einsetzenden Bremsvorgang noch bevor dieser einsetzt und daher noch bevor dieser von einem in Fahrzeug 21 vorhandenen Monokamerasensor oder einem ebenfalls vorhandenen Lidarsensor erkannt werden könnte. Da die Information ausschließlich mittels der Fahrzeug-zu-X-Kommunikationseinrichtung erfasst wurde und noch nicht mittels weiterer Sensoren validiert werden konnte, wird in Fig. 2a zunächst nur eine Warnung an den Fahrer von Fahrzeug 21 ausgegeben. Gleichzeitig werden Schwellenwerte in einem Objekterkennungsalgorithmus und einem Objektattributerkennungsalgorithmus in den Sensorrohdaten des Kamerasensors und des Lidarsensors zur Erkennung der mittels Fahrzeug-zu-X-Kommunikation übermittelten Verzögerung reduziert. Sobald der reduzierte Schwellenwert zur Erkennung des Bremsvorgangs von Fahrzeug 22 erreicht wird, wird die entsprechende Fahrzeug-zu-X-Information validiert und die validierte Information wird einem autonomen Bremsassistenten in Fahrzeug 21 zur Verfügung gestellt. Da der Fahrer von Fahrzeug 21 auf die ausgegebene Warnung nicht reagiert und sich weiter mit hoher Geschwindigkeit verzögerndem Fahrzeug 22 nähert, führt der Bremsassistent einen autonomen Bremseneingriff durch, um einen Auffahrunfall zu verhindern.

In einem weiteren, nicht dargestellten Ausführungsbeispiel beabsichtigt ein Fahrer eines Fahrzeugs nach einem Überholvorgang wieder auf seine ursprüngliche Fahrspur einzuscheren und betätigt entsprechend den Blinker, um dies anzuzeigen. Durch Betätigung des Blinkers wird automatisch mittels Fahrzeug-zu-X-Kommunikation eine Information gesendet, dass ein Fahrspurwechsel beabsichtigt ist. Ein weiteres Fahrzeug, welches diese Fahrzeug-zu-X-Information empfängt, reduziert den Schwellenwert eines Objektattributerkennungsalgorithmus, um den Fahrspurwechsel schneller erkennen zu können. Da ein Radarsensor im empfangenden Fahrzeug nun eine geringfügige Quergeschwindikeit des blinkenden Fahrzeugs erfasst, gilt der Fahrspurwechsel des blinkenden Fahrzeugs als erkannt.

Gemäß einem weiteren, ebenfalls nicht dargestellten Ausführungsbeispiel erfasst das erfindungsgemäße System erste Informationen mittels einer Fahrzeug-zu-X-Kommunikationseinrichtung und zweite Informationen mittels eines Kamerasensors. Ein Bildverarbeitungsalgorithmus des Kamerasensors generiert Objekthypothesen, welche vom Kamerasensor erfasste Fahrzeugtypen beschreiben. Diese Objekthypothesen werden in einem nächsten Schritt mittels lernfähiger Klassifikatoren, welche beispielsgemäß neuronale Netze sind, bestätigt oder verworfen. Aufgrund der großen Vielfalt der geometrischen Charakteristika verschiedener Fahrzeugtypen ist eine sichere Erkennung jedoch trotzdem nicht immer möglich. Daher wird beispielsgemäß durch die erste Information bereits ein Fahrzeugtyp übermittelt, woraufhin ein speziell an den übermittelten Fahrzeugtyp angepasster Klassifikator verwendet wird. Dies führt zu einer zuverlässigeren und schnelleren Erkennung eines Fahrzeugtypa durch den Kamerasensor.

In einem weiteren Ausführungsbeispiel wird ebenfalls ein Kamerasensor zur Erkennung eines Fahrzeugtyps verwendet. Der Kamerasensor ist einem erfindungsgemäßen System zugeordnet. Anstelle der Verwendung eines speziell an einen Fahrzeugtyp angepassten Klassifikators wird in diesem Ausführungsbeispiel ein Schwellenwert für die Klassifikationssicherheit in einem Objektattributerkennungsalgorithmus reduziert. Dies erhöht ebenfalls die Zuverlässigkeit und die Geschwindigkeit der Objekterkennung.

Ein weiteres Beispiel zur Ausführung des erfindungsgemäßen Verfahrens sieht die Verwendung des erfindungsgemäßen Systems im Rahmen einer intelligenten Abstands- und Geschwindigkeitsregelung vor. Durch die Reduzierung von entsprechenden Schwellenwerten aufgrund einer Fahrzeug-zu-X-Information können die Geschwindigkeit und Beschleunigung eines vorausfahrenden Fahrzeugs alleine mittels eines Kamerasensors erkannt werden. Dieses Ausführungsbeispiel beschreibt somit eine sehr kostengünstige Möglichkeit zur Umsetzung einer an sich bekannten intelligenten Abstands- und Geschwindigkeitsregelung.

Gemäß einem weiteren Ausführungsbeispiel werden mittels Fahrzeug-zu-X-Kommunikation empfangene Informationen über die Betätigung eines Blinkers bei einem vorausfahrenden Fahrzeug dazu genutzt, im Rahmen einer intelligenten Abstands- und Geschwindigkeitsregelung zu erkennen, ob ein vorausfahrendes Fahrzeug auf die Fahrspur des Eigenfahrzeugs zu wechseln beabsichtigt. Die Information über den beabsichtigten Fahrspurwechsel wird genutzt, um den entsprechenden Schwellenwert eines Objekterkennungsalgorithmus zu reduzieren, welcher auf die Sensorrohdaten eines Radarsensors angewandt wird. Da ein Radarsensor eine Querbewegung ohne das erfindungsgemäße Verfahren nur schwierig erkennen kann, ist beispielsgemäß eine komfortablere Abstands- und Geschwindigkeitsregelung möglich.

In Fig. 2 ist ein weiteres Ausführungsbeispiel der Erfindung zu sehen. Fahrzeug 22 ist das letzte Fahrzeug in einem Stau und Fahrzeug 21 nähert sich mit hoher Geschwindigkeit. Fahrzeug 21 verfügt über das erfindungsgemäße System und ist mit einem Radarsensor und einem Kamerasensor ausgestattet. Die Sensorreichweite des Radarsensors beträgt beispielsgemäß 200 m, die des Kamerasensors beispielsgemäß nur 60 m. Ohne das erfindungsgemäße Verfahren könnte somit erst bei einer Entfernung von nur noch 60 m zum Stauende eine validierte Information über einen bevorstehenden Auffahrunfall erzeugt werden. Mittels Fahrzeug-zu-X-Kommunikation empfängt Fahrzeug 21 jedoch eine Information von Fahrzeug 22, welche beschreibt, dass Fahrzeug 22 das Ende eines Staus darstellt.

Aufgrund des entsprechend reduzierten Schwellenwerts des Objekterkennungsalgorithmus, welcher auf die Sensorrohdaten des Radarsensors angewandt wird, wird sofort bei Erreichen der Sensorreichweite des Radarsensors ein stehendes Fahrzeug erkannt und diese Information wird umgehend validiert. Der zum Zeitpunkt der Objekterkennung und Informationsvalidierung verbleibende Abstand von 200 m ist ausreichend, um Fahrzeug 21 sicher abzubremsen und einen Unfall zu verhindern.

Fig. 4 zeigt beispielhaft und schematisch einen möglichen Aufbau des erfindungsgemäßen Systems. Das beispielhafte System besteht aus Fahrzeug-zu-X-Kommunikationseinrichtung 401, welche WLAN-Verbindungsmittel 402 gemäß dem Standard IEEE 802.11p, ISM-Verbindungsmittel 403, Infrarotverbindungsmittel 404 und Mobilfunkverbindungsmittel 405 umfasst. Des Weiteren besteht das beispielhafte System aus Sensorverbund 406, welcher Lidarsensor 407, Radarsensor 408, Monokamerasensor 409 und Ultraschallsensoren 410 umfasst. Über Datenleitungen (drahtgebunden oder drahtlos) 412 und 412' sind Fahrzeug-zu-X-Kommunikationseinrichtung 401 und Sensorverbund 406 mit Analysevorrichtung 411 gekoppelt. Analysevorrichtung 411 führt einen Objekterkennungsalgorithmus und einen Objektattributerkennungsalgorithmus auf die von Sensorverbund 401 erfassten Informationen aus, welche in Sensorrohdatenform vorliegen. Zur beschleunigten Objekterkennung und zur beschleunigten Objektattributerkennung werden Schwellenwerte des Objekterkennungsalgorithmus und des Objektattributerkennungsalgorithmus zur Erkennung von bereits mittels der Fahrzeug-zu-X-Kommunikationeinrichtung beschriebenen Objekten und Objektattributen in den Sensorrohdaten reduziert. Wenn ein Schwellenwert erreicht wird, erkennt Analysevorrichtung 411 ein Objekt bzw. ein Objektattribut in den Sensorrohdaten von Sensorverbund 401 und validiert die entsprechenden Informationen. Die Sensorrohdaten werden anschließend von Analysevorrichtung 411 in ausgewertete Datenform umgewandelt und zusammen mit der Fahrzeug-zu-X-Information über Datenleitung (drahtlos oder drahtgebunden 413 einem Fahrerassistenzsystem (nicht dargestellt) zur Verfügung gestellt.

## Patentansprüche

1. Verfahren zur beschleunigten Objekterkennung und/oder zur beschleunigten Objektattributerkennung,
wobei eine erste Information erfasst wird, wobei die erste Information mindestens ein Objekt und/oder mindestens ein Objektattribut in ausgewerteter Datenform beschreibt,
wobei eine zweite Information von mindestens einem Einzelsensor (407, 408, 409, 410) oder von einem Sensorverbund (406) erfasst wird,
wobei die zweite Information das mindestens eine Objekt und/oder das mindestens eine Objektattribut in Sensorrohdatenform beschreibt,
wobei auf Sensorrohdaten der zweiten Information ein Objekterkennungsalgorithmus und/oder ein Objektattributerkennungsalgorithmus angewandt wird, sobald ein Schwellenwert des Objekterkennungsalgorithmus und/oder des Objektattributerkennungsalgorithmus erreicht wird,
**dadurch gekennzeichnet, dass** die erste Information von einer Fahrzeug-zu-X-Kommunikationseinrichtung (401) erfasst wird, dass das mindestens eine Objekt und/oder das mindestens eine Objektattribut in den Sensorrohdaten der zweiten Information erkannt wird, und dass der Schwellenwert des Objekterkennungsalgorithmus und/oder des Objektattributerkennungsalgorithmus zur Erkennung des von der ersten Information beschriebenen mindestens einen Objekts und/oder mindestens einen Objektattributs in den Sensorrohdaten der zweiten Information reduziert wird.

2. Verfahren nach Anspruch 1,
**dadurch gekennzeichnet,**
**dass** der Objekterkennungsalgorithmus eine Existenz eines Objekts erkennt und/oder der Objektattributerkennungsalgorithmus eine Bewegungsrichtung und/oder eine relative und/oder absolute Position und/oder eine Geschwindigkeit und/oder eine Gattung des Objekts erkennt.

3. Verfahren nach mindestens einem der Ansprüche 1 und 2,
**dadurch gekennzeichnet,**
**dass** der Schwellenwert hinsichtlich der zu seinem Erreichen notwendigen Anzahl an Messzyklen, während der die zweite Information erfasst wird, reduziert wird.

4. Verfahren nach mindestens einem der Ansprüche 1 bis 3,
**dadurch gekennzeichnet,**
**dass** der Schwellenwert hinsichtlich der zu seinem Erreichen notwendigen statistischen Wahrscheinlichkeit, mit der das mindestens eine Objekt und/oder das mindestens eine Objektattribut in den Sensorrohdaten erkannt wird, reduziert wird.

5. Verfahren nach mindestens einem der Ansprüche 1 bis 4,
**dadurch gekennzeichnet,**
**dass** bei Erreichen des Schwellenwerts eine Beschreibung des mindestens einen erkannten Objekts und/oder des mindestens einen erkannten Objektattributs von Sensorrohdatenform in ausgewertete Datenform umgewandelt wird.

6. Verfahren nach mindestens einem der Ansprüche 1 bis 5,
**dadurch gekennzeichnet,**
**dass** das mindestens eine Objekt und/oder das mindestens eine Objektattribut als validiert gekennzeichnet wird, sobald der Schwellenwert des Objekterkennungsalgorithmus und/oder des Objektattributerkennungsalgorithmus erreicht wird.

7. Verfahren nach mindestens einem der Ansprüche 1 bis 6,
**dadurch gekennzeichnet,**
**dass** das Verfahren einem kontinuierlichen Sensordatenfusionsprozess eingegliedert ist, wobei jeder Einzelsensor pro Messzyklus eine eigene zweite Information bereitstellt oder der Sensorverbund pro Messzyklus eine Vielzahl von zweiten Informationen bereitstellt, wobei der Sensordatenfusionsprozess in den Sensorrohdaten der zweiten Informationen erkannte Objekte und/oder Objektattribute untereinander abgleicht und/oder ergänzt und eine gemeinsame Fusionsinformation in ausgewerteter Datenform erzeugt, wobei die Eingliederung in den Sensordatenfusionsprozess derart ausgeführt ist, dass in der ersten Information beschriebene Objekte und/oder Objektattribute mit den in den Sensorrohdaten der zweiten Informationen erkannten Objekten und Objektattributen abgeglichen und/oder ergänzt werden.

8. Verfahren nach Anspruch 6,
**dadurch gekennzeichnet,**
**dass** das mindestens eine als validiert gekennzeichnete Objekt und/oder das mindestens eine als validiert gekennzeichnete Objektattribut in ausgewerteter Datenform mindestens einem Fahrerassistenzsystem zur Verfügung gestellt wird, wobei das mindestens eine Fahrerassistenzsystem zur Bewarnung eines Fahrers und/oder zum Eingreifen in die Fahrzeugsteuerung und/oder zum Übersteuern einer Fahrervorgabe ausgebildet ist.

9. System zur beschleunigten Objekterkennung und zur beschleunigten Objektattributerkennung,
wobei das System dazu ausgebildet ist, ein Verfahren nach mindestens einem der Ansprüche 1 bis 8 auszuführen, umfassend eine Fahrzeug-zu-X-Kommunikationseinrichtung (401) zum Erfassen einer ersten Information,
wobei die erste Information mindestens ein Objekt und/oder mindestens ein Objektattribut in ausgewerteter Datenform beschreibt,
mindestens einen Einzelsensor (407, 408, 409, 410) oder einen Sensorverbund (406) zum Erfassen einer zweiten Information,
wobei die zweite Information mindestens ein Objekt und/oder mindestens ein Objektattribut in Sensorrohdatenform beschreibt und
eine Analysevorrichtung (411),
welche auf Datenebene mit der Fahrzeug-zu-X-Kommunikationseinrichtung (401) und dem mindestens einen Einzelsensor (407, 408, 409, 410) oder dem Sensorverbund (406) gekoppelt ist,
wobei die Analysevorrichtung (411) dazu ausgebildet ist, einen Objekterkennungsalgorithmus und/oder einen Objektattributerkennungsalgorithmus auszuführen und auf Sensorrohdaten der zweiten Information anzuwenden und
wobei das mindestens eine Objekt und/oder das mindestens eine Objektattribut in den Sensorrohdaten der zweiten Information erkannt wird, sobald ein Schwellenwert des Objekterkennungsalgorithmus und/oder des Objektattributerkennungsalgorithmus erreicht wird,
**dadurch gekennzeichnet,**
**dass** die Analysevorrichtung (411) dazu ausgebildet ist, den Schwellenwert des Objekterkennungsalgorithmus und/oder des Objektattributerkennungsalgorithmus zur Erkennung des von der ersten Information beschriebenen mindestens einen Objekts und/oder mindestens einen Objektattributs in den Sensorrohdaten der zweiten Information zu reduzieren.

10. System nach Anspruch 9,
**dadurch gekennzeichnet,**
**dass** die Analysevorrichtung (411) ein elektronisches Rechenwerk umfasst, welches zumindest anteilig Rechenoperationen für von der Analysevorrichtung (411) verschiedene Fahrzeugeinrichtungen ausführt.

11. System nach mindestens einem der Ansprüche 9 und 10,
**dadurch gekennzeichnet,**
**dass** die Analysevorrichtung (411) dazu ausgebildet ist, bei Erreichen des Schwellenwerts eine Beschreibung des mindestens einen erkannten Objekts und/oder des mindestens einen erkannten Objektattributs von Sensorrohdatenform in ausgewertete Datenform umzuwandeln.

12. System nach mindestens einem der Ansprüche 9 bis 11,
**dadurch gekennzeichnet,**
**dass** die Analysevorrichtung (411) dazu ausgebildet ist, zusätzlich einen kontinuierlichen Sensordatenfusionsprozess auszuführen, wobei jeder Einzelsensor pro Messzyklus eine eigene zweite Information bereitstellt oder der Sensorverbund pro Messzyklus eine Vielzahl von zweiten Informationen bereitstellt, wobei der Sensordatenfusionsprozess in den Sensorrohdaten der zweiten Informationen erkannte Objekte und/oder Objektattribute untereinander abgleicht und/oder ergänzt und eine gemeinsame Fusionsinformation in ausgewerteter Datenform erzeugt, wobei die Analysevorrichtung (411) dazu ausgebildet ist, in der ersten Information beschriebene Objekte und/oder Objektattribute mit den in den Sensorrohdaten der zweiten Informationen erkannten Objekten und/oder Objektattributen abzugleichen und/oder zu ergänzen.

13. System nach mindestens einem der Ansprüche 9 bis 12,
**dadurch gekennzeichnet,**
**dass** der mindestens eine Einzelsensor (407, 408, 409, 410) oder der Sensorverbund (406) die zweite Information auf Basis mindestens eines der folgenden Wirkprinzipien erfasst:
- Lidar (407),
- Radar (408),
- Kamera (409) und
- Ultraschall (410).

14. System nach mindestens einem der Ansprüche 9 bis 13,
**dadurch gekennzeichnet,**
**dass** die Fahrzeug-zu-X-Kommunikationseinrichtung (401) die erste Information auf Basis mindestens einer der folgenden Verbindungsarten erfasst:
- WLAN-Verbindung (402), insbesondere nach IEEE 802.11,
- ISM-Verbindung (Industrial, Scientific, Medical Band) (403),
- Bluetooth,
- ZigBee,
- UWB,
- WiMax,
- Infrarotverbindung (404) und
- Mobilfunkverbindung (405).

15. Verwendung des Verfahrens nach mindestens einem der Ansprüche 1 bis 8 in einem Kraftfahrzeug.

## Claims

1. A method for accelerated object and/or object attribute recognition,
wherein a first information item is acquired,
wherein the first information item describes at least one object and/or at least one object attribute in an evaluated data form,
wherein a second information item is acquired by at least one individual sensor (407, 408, 409, 410) or by a sensor group (406),
wherein the second information item describes the at least one object and/or the at least one object attribute in a sensor raw data form,
wherein an object recognition algorithm and/or an object attribute recognition algorithm is/are applied to sensor raw data of the second information item as soon as a threshold value of the object recognition algorithm and/or of the object attribute recognition algorithm is reached,
**characterized in that**
the first information item is acquired by a vehicle-to-X communication device (401),
the at least one object and/or the at least one object attribute is recognized in the sensor raw data of the second information item, and
the threshold value of the object recognition algorithm and/or of the object attribute recognition algorithm for recognising the at least one object and/or at least one object attribute described by the first information item is reduced in the sensor raw data of the second information item.

2. The method according to Claim 1,
**characterized in that**
the object recognition algorithm recognises the existence of an object and/or the object attribute recognition algorithm recognises a direction of movement and/or a relative and/or absolute position and/or a speed and/or a type of the object.

3. The method according to at least one of Claims 1 and 2, **characterized in that** the threshold value is reduced in terms of the number of measurement cycles which are necessary to reach said value, during which number of measurement cycles the second information item is acquired.

4. The method according to at least one of Claims 1 to 3, **characterized in that** the threshold value is reduced in terms of the statistical probability necessary to reach said value of the at least one object and/or of the at least one object attribute being recognised in the sensor raw data.

5. The method according to at least one of Claims 1 to 4, **characterized in that** when the threshold value is reached, a description of the at least one recognised object and/or of the at least one recognised object attribute is converted from a sensor raw data form into an evaluated data form.

6. The method according to at least one of Claims 1 to 5, **characterized in that** the validity of the at least one object and/or of the at least one object attribute is characterized as having been checked as soon as the threshold value of the object recognition algorithm and/or of the object attribute recognition algorithm is reached.

7. The method according to at least one of Claims 1 to 6, **characterized in that** the method is incorporated into a continuous sensor data fusion process, wherein each individual sensor provides a separate second information item for each measurement cycle, or the sensor group provides a plurality of second information items for each measurement cycle, wherein the sensor data fusion process compares objects and/or object attributes recognised in the sensor raw data of the second information items with one another and/or supplements them and generates a common fusion information item in an evaluated data form, wherein the incorporation into the sensor data fusion process is carried out in such a way that objects and/or object attributes which are described in the first information item are compared and/or supplemented with the objects and object attributes recognised in the sensor raw data of the second information items.

8. The method according to Claim 6,
**characterized in that**
the at least one object whose validity is characterized as having been checked and/or the at least one object attribute whose validity is characterized as having been checked is/are made available in an evaluated data form to at least one driver assistance system, wherein the at least one driver assistance system is configured to warn a driver and/or to intervene in the vehicle control and/or to override a driver's action.

9. A system for accelerated object and/or object attribute recognition,
wherein the system is configured to carry out a method according to at least one of Claims 1 to 8, comprising a vehicle-to-X communication device (401) for acquiring a first information item,
wherein the first information item describes at least one object and/or at least one object attribute in an evaluated data form,
at least one individual sensor (407, 408, 409, 410) or a sensor group (406) for acquiring a second information item,
wherein the second information item describes at least one object and/or at least one object attribute in a sensor raw data form, and
an analysis device (411),
which is coupled at a data level to the vehicle-to-X communication device (401) and to the at least one individual sensor (407, 408, 409, 410) or the sensor group (406),
wherein the analysis device (411) is configured to implement an object recognition algorithm and/or an object attribute recognition algorithm and to apply the algorithm to sensor raw data of the second information item, and
wherein the at least one object and/or the at least one object attribute is/are recognised in the sensor raw data of the second information item as soon as a threshold value of the object recognition algorithm and/or of the object attribute recognition algorithm is reached,
**characterized in that**
the analysis device (411) is configured to reduce the threshold value of the object recognition algorithm and/or of the object attribute recognition algorithm for recognising the at least one object and/or at least one object attribute described by the first information item in the sensor raw data of the second information item.

10. The system according to Claim 9,
**characterized in that**
the analysis device (411) comprises an electronic computational unit which carries out at least some of the computational operations for different vehicle devices to the analysis device (411).

11. The system according to at least one of Claims 9 and 10,
**characterized in that**
the analysis device (411) is configured to convert a description of the at least one recognised object and/or of the at least one recognised object attribute from the sensor raw data form into an evaluated data form when the threshold value is reached.

12. The system according to at least one of Claims 9 to 11,
**characterised in that**
the analysis device (411) is configured to additionally carry out a continuous sensor data fusion process, wherein each individual sensor provides a separate second information item for each measurement cycle, or the sensor group provides a plurality of second information items for each measurement cycle, wherein the sensor data fusion process compares objects and/or object attributes recognised in the sensor raw data of the second information items with one another and/or supplements them and generates a common fusion information item in an evaluated data form, wherein the analysis device (411) is configured to compare and/or supplement objects and/or object attributes described in the first information item with the objects and/or object attributes recognised in the sensor raw data of the second information items.

13. The system according to at least one of Claims 9 to 12, **characterized in that** the at least one individual sensor (407, 408, 409, 410) or the sensor group (406) acquires the second information item on the basis of at least one of the following operational principles:
- lidar (407),
- radar (408),
- a camera (409), and
- ultrasonic sound (410).

14. The system according to at least one of Claims 9 to 13, **characterized in that** the vehicle-to-X communication device (401) acquires the first information item on the basis of at least one of the following types of connection:
- WLAN connection (402), in particular according to IEEE 802.11,
- ISM connection (Industrial, Scientific, Medical Band) (403),
- Bluetooth,
- ZigBee,
- UWB,
- WiMax,
- infrared link (404), and
- mobile radio link (405).

15. Use of the method according to at least one of Claims 1 to 8 in a motor vehicle.

## Revendications

1. Procédé pour la reconnaissance d'objets accélérée et/ou pour la reconnaissance de caractéristiques d'objets accélérée,
une première information étant collectée,
la première information décrivant au moins un objet et/ou au moins une caractéristique d'objet sous forme de données analysées,
une deuxième information étant collectée par au moins un capteur individuel (407, 408, 409, 410) ou par un groupement de capteurs (406),
la deuxième information décrivant l'au moins un objet et/ou l'au moins une caractéristique d'objet sous forme de données de capteurs brutes,
un algorithme de reconnaissance d'objets et/ou un algorithme de reconnaissance de caractéristiques d'objets étant appliqués aux données de capteur brutes de la deuxième information,
dès qu'une valeur seuil de l'algorithme de reconnaissance d'objets et/ou de l'algorithme de reconnaissance de caractéristiques d'objets est atteinte.
**caractérisé en ce que**
la première information est collectée par une installation de communication de véhicule à X (401), **en ce que** l'au moins un objet et/ou l'au moins une caractéristique d'objet sont reconnus dans les données de capteur brutes de la deuxième information, et
**en ce que** la valeur seuil de l'algorithme de reconnaissance d'objets et/ou de l'algorithme de reconnaissance de caractéristiques d'objets est réduite, pour la reconnaissance de l'au moins un objet décrit par la première information et/ou de l'au moins une caractéristique d'objet dans les données de capteur brutes de la deuxième information.

2. Procédé selon la revendication 1,
**caractérisé en ce que**
l'algorithme de reconnaissance d'objets reconnaît une existence d'un objet et/ou l'algorithme de reconnaissance de caractéristiques d'objets reconnaît une direction de mouvement et/ou une position relative et/ou absolue et/ou une vitesse et/ou une classe de l'objet.

3. Procédé selon au moins l'une des revendications 1 et 2,
**caractérisé en ce que**
la valeur seuil est réduite relativement au nombre de cycles de mesure requis pour être atteinte, pendant lesquels la deuxième information est collectée.

4. Procédé selon au moins l'une des revendications 1 à 3,
**caractérisé en ce que**
la valeur seuil est réduite relativement à la probabilité statistique requise pour être atteinte, avec laquelle l'au moins un objet et/ou l'au moins une caractéristique d'objet sont reconnus dans les données de capteur brutes.

5. Procédé selon au moins l'une des revendications 1 à 4,
**caractérisé en ce qu'**
une description de l'au moins un objet reconnu et/ou de l'au moins une caractéristique d'objet reconnue est convertie en une forme de données analysées, à partir de la forme de données de capteur brutes, lorsque la valeur seuil est atteinte.

6. Procédé selon au moins l'une des revendications 1 à 5,
**caractérisé en ce que**
l'au moins un objet et/ou l'au moins une caractéristique d'objet sont caractérisés comme étant validés, dès que la valeur seuil de l'algorithme de reconnaissance d'objets et/ou de l'algorithme de reconnaissance de caractéristiques d'objets est atteinte.

7. Procédé selon au moins l'une des revendications 1 à 6,
**caractérisé en ce que**
le procédé est incorporé à un processus de fusion de données de capteurs continu, chaque capteur individuel mettant à disposition une deuxième information propre par cycle de mesure ou le groupement de capteurs mettant à disposition une multiplicité de deuxièmes informations par cycle de mesure, le processus de fusion de données de capteurs comparant entre eux et/ou complétant, dans les données brutes de capteur des deuxièmes informations, des objets et/ou des caractéristiques d'objets reconnus, et génère une information de fusion commune sous forme de données analysées, l'incorporation dans le processus de fusion de données de capteurs étant effectuée de telle sorte que des objets et/ou des caractéristiques d'objets décrits dans la première information sont comparés et/ou complétés avec les objets et les caractéristiques d'objets reconnus dans les données de capteur brutes de la deuxième information.

8. Procédé selon la revendication 6,
**caractérisé en ce que**
l'au moins un objet caractérisé comme étant validé et/ou l'au moins une caractéristique d'objet caractérisée comme étant validée sont mis à disposition d'au moins un système d'aide à la conduite, sous forme de données analysées, l'au moins un système d'aide à la conduite étant conçu pour l'avertissement d'un conducteur et/ou pour l'intervention au niveau du pilotage du véhicule et/ou pour prendre la priorité sur une consigne du conducteur.

9. Procédé pour la reconnaissance d'objets accélérée et/ou pour la reconnaissance de caractéristiques d'objets accélérée,
le système étant conçu afin d'exécuter un procédé selon au moins l'une des revendications 1 à 8, comprenant une installation de communication de véhicule à X (401) pour la collecte d'une première information.
la première information décrivant au moins un objet et/ou au moins une caractéristique d'objet sous la forme de données analysées,
au moins un capteur individuel (407, 408, 409, 410) ou un groupement de capteurs (406) pour la collecte d'une deuxième information,
la deuxième information décrivant au moins un objet et/ou au moins une caractéristique d'objet sous forme de données de capteur brutes, et
un dispositif d'analyse (411),
lequel est couplé au niveau des données avec l'installation de communication de véhicule à X (401) et avec l'au moins un capteur individuel (407, 408, 409, 410) ou avec le groupement de capteurs (406),
le dispositif d'analyse (411) étant formé pour exécuter un algorithme de reconnaissance d'objets et/ou un algorithme de reconnaissance de caractéristiques d'objets et pour les appliquer aux données de capteur brutes de la deuxième information, et
l'au moins un objet et/ou l'au moins une caractéristique d'objet étant reconnus dans les données de capteur brutes de la deuxième information, dès qu'une valeur seuil de l'algorithme de reconnaissance d'objets et/ou de l'algorithme de reconnaissance de caractéristiques d'objets est atteinte.
**caractérisé en ce que**
**en ce que** le dispositif d'analyse (411) est formé pour réduire la valeur seuil de l'algorithme de reconnaissance d'objets et/ou de l'algorithme de reconnaissance de caractéristiques d'objets pour la reconnaissance d'au moins un objet décrit par la première information et/ou d'au moins une caractéristique d'objet dans les données de capteur brutes de la deuxième information.

10. Système selon la revendication 9,
**caractérisé en ce que**
le dispositif d'analyse (411) comprend une unité arithmétique électronique, laquelle exécute au moins en partie des opérations de calcul pour des installations de véhicule différentes du dispositif d'analyse (411).

11. Système selon au moins l'une des revendications 9 et 10,
**caractérisé en ce que**
le dispositif d'analyse (411) est formé pour convertir une description de l'au moins un objet reconnu et/ou de l'au moins une caractéristique d'objet reconnue en forme de données analysées, à partir de la forme de données de capteur brutes, lorsque la valeur seuil est atteinte.

12. Système selon au moins l'une des revendications 9 à 11,
**caractérisé en ce que**
le dispositif d'analyse (411) est formé pour exécuter de plus un processus de fusion de données de capteurs continu, chaque capteur individuel mettant à disposition une deuxième information propre par cycle de mesure ou le groupement de capteurs mettant à disposition une multiplicité de deuxièmes informations par cycle de mesure, le processus de fusion de données de capteurs comparant entre eux et/ou complétant, dans les données brutes de capteur des deuxièmes informations, des objets et/ou des caractéristiques d'objets reconnus, et générant une information de fusion commune sous forme de données analysées, le dispositif d'analyse (411) étant formé pour comparer et/ou compléter des objets et/ou des caractéristiques d'objets décrits dans la première information avec les objets et les caractéristiques d'objets reconnus dans les données de capteur brutes des deuxièmes informations.

13. Système selon au moins l'une des revendications 9 à 12,
**caractérisé en ce que**
l'au moins un capteur individuel (407, 408, 409, 410) ou le groupement de capteurs (406) collectent la deuxième information sur la base d'au moins un des principes de fonctionnement suivants :
- lidar (407,
- radar (408),
- caméra (409) et
- ultrasons (410).

14. Système selon au moins l'une des revendications 9 à 13, **caractérisé en ce que** l'installation de communication de véhicule à X (401) collecte la première information sur la base d'au moins un des modes de connexion suivants :
- connexion WLAN (402), en particulier conformément à IEEE 802.11,
- connexion ISM (bandes industrielle, scientifique, médicale) (403),
- Bluetooth,
- ZigBee,
- ULB,
- WiMax,
- connexion infrarouge (404) et
- connexion par téléphonie mobile (405).

15. Utilisation du procédé selon au moins l'une des revendications 1 à 8 dans un véhicule à moteur.
